(19) Europäisches Patentamt
European Patent Office
Office européen des brevets

(11) Publication number: **0 244 680 A1**

(12) **EUROPEAN PATENT APPLICATION**

(21) Application number: 87105664.4

(51) Int. Cl.⁴: **A01N 1/00**

(22) Date of filing: 16.04.87

(30) Priority: 24.04.86 US 855985

(43) Date of publication of application: 11.11.87 Bulletin 87/46

(84) Designated Contracting States: AT BE CH DE ES FR GB GR IT LI LU NL SE

(71) Applicant: von Hagens, Gunther, Dr.
Rathausstrasse 18
D-6900 Heidelberg(DE)

Applicant: Becker, Reinhard
Kirchenthaler Strasse 34
D-7014 Kornwestheim(DE)

(72) Inventor: von Hagens, Gunther, Dr.
Rathausstrasse 18
D-6900 Heidelberg(DE)
Inventor: Becker, Reinhard
Kirchenthaler Strasse 34
D-7014 Kornwestheim(DE)

(74) Representative: Ratzel, Gerhard, Dr.
Seckenheimer Strasse 36a
D-6800 Mannheim 1(DE)

(54) **Preservation of perishable biological specimens.**

(57) A process and composition for the preservation of perishable biological specimens is used to embalm macroscopic lifeless biological specimens by immersion, infusion and infiltration techniques with a composition containing embalming agents that are compounds of the formula

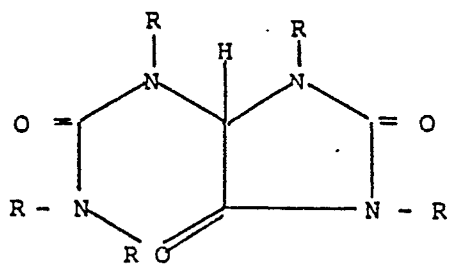

(I)

wherein R may be the same or different and is selected from the group consisting of H, $CH_2OH$. and $-CH_2-$, with the proviso that all of the R groups may not simultaneously be hydrogen and that when R is $-CH_2-$, both bonds may be attached to the same nitrogen atom or to two different nitrogen atoms, or may serve as a bridge to connect one additional unit having structure I.

EP 0 244 680 A1

# PRESERVATION OF PERISHABLE BIOLOGICAL SPECIMENS

## BACKGROUND OF THE INVENTION

### I. Field of the Invention

This invention relates to a process and composition for the preservation of perishable biological specimens. More particularly, this invention relates to the embalming of macroscopic lifeless biological specimens of the animal and plant kingdom by treatment with a compound containing a condensation product of formaldehyde and allantoin.

### 2. Description of the Prior Art

Many compounds, which are useful to preserve specimens are known. The mostly used chemical is formaldehyde which is also the common preservative in embalming. Over the years, a number of different compounds have been disclosed as being useful for embalming purposes in the following scientific literature:

I. Glyoxal (U. S. Patent No. 2,333,I82, I942);

2. Aldehyde containing compounds (U. S. Patents No. 3,I97,366, I965; 3,249,502, I966; 3,057,775 I962);

3. Formaldehyde spitting off compounds (U. S. Patents No. 2,564,366, I937; 2,3I8,3I9, I95I);

4. Use of heterocyclic compounds with a I,4-dioxanone ring structure or its hydrolyses products (U. S. Patent No. 3,264,I82, I962);

5. Use of polyethylene glycols (U. S. Patent No. 2,786,08I, I957).

However, all compounds used up to now and the specimens preserved therewith are objectionable for one or several of the following reasons:

I. High toxicity (e.g., glyoxal);

2. Allergenic properties (e.g., aldehydes);

3. Unpleasant or dangerous fumes of the agent (e.g. aldehydes);

4. Objectionable odor of the treated specimens (e.g., aldehydes, I,4-dioxanone compounds);

5. Rendering the treated specimens, especially its connective tissue, rigid (e.g., formaldehyde, glutaraldehyde);

6. Loss of color (e.g., formaldehyde) or inappropriate staining of the specimens (e.g., I,4-dioxanone compounds);

7. Insufficient preservation of nervous tissue, e.g., brain (e.g., I,4-dioxanone compounds);

8. Slow penetration into tissue (e.g., glutaraldehyde);

9. Necessity of two preservation solutions in succession (e.g., polyethylene glycol);

I0. Insufficient preservation (e.g., quaternary ammonium compounds).

Despite its severe drawbacks, namely, poor color preservation, strong odor and high toxicity, formaldehyde is still almost exclusively used as the chemical for the embalming of animal and human specimens, at least for the initial fixation. A better method for the embalming of biological animal and human specimens has become especially urgent, since the discovery of the carcinogenic potential of formaldehyde (e.g. editorial: "Towards Control of Nasal Cancer", The Lancet 586-587, I983).

## SUMMARY OF THE INVENTION

We have discovered a new process and composition for embalming animal and human specimens. More particularly, the process comprises treating the specimens with a composition composed of an effective amount of an embalming agent and conventional additives, e.g., alcohols and diluents, wherein the embalming agent is

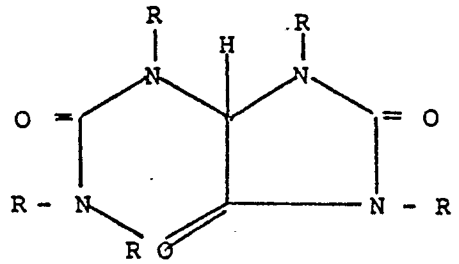

(I)

wherein R may be the same or different and is selected from the group consisting of H, $CH_2OH$ and $-CH_2-$, with the proviso that all of the R groups may not simultaneously be hydrogen and that when R is $-CH_2-$, both bonds may be attached to the same nitrogen atom or to two different nitrogen atoms or may serve as a bridge to connect one additional unit having structure I.

The present process and composition provide the following advantages:

I. Fast penetration of the embalming agent into the specimens, especially into dense and lipid rich tissues, such as, brain;

2. No toxic and allergenic properties;

3. The necessity of using only one embalming solution, i.e., there is no necessity to use two preservation solutions in succession;

4. Thorough preservation throughout the specimens.

5. No objectionable odor in either the embalming agent or the treated specimens;

6. Outstanding dissection properties, such as, soft connective tissue, pliable but tear-resistant muscle tissue;

7. Good color preservation and good contrast between different kinds of tissues.

8. Good preservation of nervous tissue, especially of the human brain with sharp differentiation of white and gray matter.

As used herein, animal and human specimens means an animal or human body or any macroscopic part thereof.

More particularly, it is the aim of the present invention to replace the conventional formalin embalming with a method and composition which does not render the treating solution and/or the specimens toxic, with stringent odor, colorless and rigid, as it is the case with the formalin process.

## DETAILED DESCRIPTION OF THE PREFERRED EMBODIMENTS

The term "embalming" as used herein means that on the one hand the enzymatic action within the tissue is stopped (also called fixation), thus preventing its autocatalytic destruction, and on the other hand, the treated tissue resists external attack from bacteria and fungi. Accordingly, an embalming composition is a fluid effecting these actions. Such a composition contains an effective embalming amount of an agent which is mainly responsible for the embalming effect as well as a solvent and may contain other conventional additives.

Examples of solvent and conventional additives are water, alcohol, e.g., ethanol, isopropanol, polyols, e.g. ethyleneglycol, other preservatives, e.g., ester of p-hydroxybenzoic acid, and detergents, e.g., Triton. Any relatively inert substance which dissolves the chemicals used is suitable as the solvent of the embalming solution.

As used herein, there is no difference between preservation, fixation and/or embalming.

Preferable embalming agents for use with the present invention are

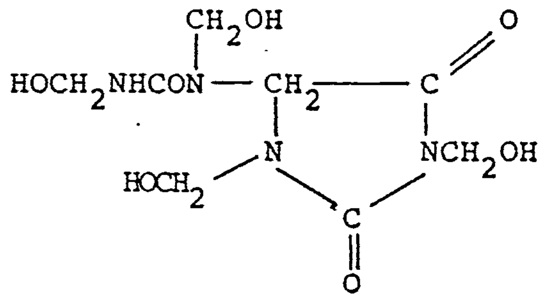

and

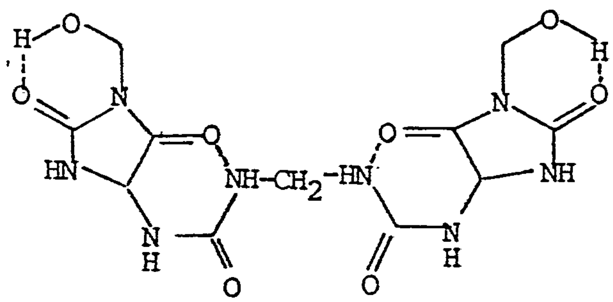

When "immersion" is used for embalming the specimens, it is simply placed into the embalming solution. This procedure especially suitable for small, e.g., insects, or thin-walled, e.g., intestine, specimens.

"Infiltration" is carried out by direct injection of a cannula into the specimen tissue, not via the blood vessels. Infiltration is performed if specimens are too thick for immersion and cannot be injected via the blood vessel system. It is also used for all specimens without a blood vessel system, for specimens whose blood vessel system was damaged, e.g., dissected joint specimens, or for specimens whose blood vessel system was filled with foreign matter, such as, contrasting material.

"Infusion" is any kind of intravascular injection. In most cases, arteries are injected rather than veins. Whole bodies or individual extremities are injected best via an extremity artery. Infusion can be effected by gravity or by any kind of pressure. The embalming solution is allowed to diffuse into the rest of the tissue during and after infusion.

The following examples illustrate the invention and describe three kinds of experiments. The first example describes the infusion of 35 adult rats, each with a different embalming solution. The second example describes the immersion of I5 infant rats with the embalming solutions of the first example and the third example describes the infusion of 5 human cadavers with the embalming solutions which proved best in the rat experiments.

Additionally, immersion experiments of different kinds of specimens, including dissected specimens, e.g., joints, and small animals, e.g., insects, are described.

EXAMPLE I -Infusion of 35 Adult Rats

35 adult rats were killed by an overdose of narcotics. The embalming solution was infused into the abdominal aorta. Infusion was effected by gravity. i.e.. the embalming solution-containing infusion bottle was placed 2 m above the rats.

The following embalming solutions were used: diethylene glycol 47.5 - 97.5 %. Triton 0.5 %. pine oil 2 %, substance tested in a concentration between 2 - 50% as set forth in Table I. The group names of the substances tested are listed alphabetically. When solvents like ethanol or diethylene glycol were used as a testing substance. this was done for comparison purposes. The following compounds were tested:

| | Compound No. | Compound |
|---|---|---|
| 10 Acids | | |
| | 1001 | acetic acid |
| | 1002 | per-acetic acid |
| | 1003 | ethoxy-6,9-diaminoacridin lactate |
| 15 Alcohols | | |
| | 1501 | ethanol |
| | 1502 | isopropanol |
| 20 Aldehydes | | |
| | 2001 | formaldehyde |
| | 2002 | glutaraldehyde |
| 25 Amphotensides | | |
| | 2501 | dodecyl-di(aminoethyl)-glycin |
| 30 Chloro split-off substance | | |
| | 3001 | chloroacetamide = $NH_2-C=O-CH_2Cl$ |
| 35 Dioxane derivatives | | |
| | 3501 | 5-brom-5-nitro-1,3-dioxane |
| | 3502 | 6-acetoxy-2,4-dimethyl-m-dioxane |
| | 3503 | brom-2-nitro-1,3-propane diol |

40 Biguanid

| | |
|---|---|
| 4001 | polyhexamethylene biguanidhydro-chloride |
| 4002 | n-methylen-1-alkyl-biguanid |

45 Formaldehyde split-off compounds

| | |
|---|---|
| 4501 | benzylalcohol mono-(poly)-hemiformal |

50 Judophors

| | |
|---|---|
| 5001 | polyvinyl pyrrolidone iodine |

55 Phenol and derivatives

| | |
|---|---|
| 5502 | 1,6-di-(p-chlorphenyldiguanido)-hexane-digluconate |
| 5503 | p-chlor-m-cresol |
| 5504 | o-phenyl-phenol |
| 5506 | p-chlor-m-xylenol |
| 5507 | o-benzyl-p-chlorophenol |
| 5508 | 3-methyl-4-chlorphenol |

60 Polyol

| | |
|---|---|
| 6001 | diethylene glycol |
| 6002 | glycerin |

65 Quaternary ammonium compounds

| | |
|---|---|
| 6501 | didecyl-dimethyl-ammonium chloride |
| 6502 | alkyl-dimethyl-benzyl-ammonium chloride |

70 Sulfur containing compounds

| | |
|---|---|
| 7001 | 5-chlor-2-methyl-4-isothiazolin-3-one |
| 7002 | 2-methyl-4-isothiazolin-3-one |
| 7003 | 2-n-octyl-4-isothiazolin-3-one |
| 7004 | 1,2-benzisothiazolin-3-one |
| 7005 | sodium-2-pyridinethiol-1-oxide |
| 7006 | 3,5-dimethyl-perhydro-1,3,5-thiadiazin-2-thion |

75 Allantoin derivatives

(in accordance with the invention)

| | |
|---|---|
| 7501 | N',N'''-bis(2,5-dioxo-1-hydroxymethyl-imidazolin-4-yl)-N,N'methylene urea |
| 7502. | N-(hydroxymethyl)-N-(1,3-dihydroxy-methyl-2,5-dioxo-4-imidazolindynyl)-N-(hydroxymethyl)urea |

The rats were sealed airtight into a plastic bag and stored for a period of 2 - 3 months. Thereafter, the rats were dissected.

The skin, all major muscle groups, and the organs, i.e., lung, heart, liver, stomach, kidney and brain, were judged for color, consistency and overall impression.

The results of the rat experiments where infusion was used are given in Table I. For all items to be judged, grades were given, reach from I to 3. "a" stands for appearance (color), "c" stands for consistency. More specifically, the grades were given according to the following system:

Color (=a)

I lifelike
2 pale or gray, but differences between different kinds of tissue can be seen,
3 black, gray and uniform, or bleached and completely white, virtually no differentiations between different kinds of tissues can be seen.

Consistency (=c)

I flexible, pliable, tear-resistant, connective tissue is easily dissectable,
2 dissection possible but difficult (connective tissue too soft or too stiff), no putrefaction,
3 rotten, very soft, not dissectable.

Odor

I no odor or agreeable odor
2 slightly stringent, bearable (possible to work with)
3 very stringent or odor of putrefaction, not agreeable.

The presence or absence of mold was indicated by a + or - sign, respectively.

Overall Quality

I very good for dissection
2 can be used for dissection but not highly satisfactory
3 unsuitable for dissection

TABLE NO. 1

Results of embalming by infusion of 35 adult rats

| Subst. tested | % | Lung a | Lung c | Heart a | Heart c | Liver a | Liver c | Intest a | Intest c | Kidney a | Kidney c | Brain a | Brain c | Muscle a | Muscle c | Odor | Mold | Overall quality |
|---|---|---|---|---|---|---|---|---|---|---|---|---|---|---|---|---|---|---|
| 1001 | 50 | 3 | 2 | 3 | 2 | 3 | 1 | 3 | 2 | 3 | 1 | 2 | 2 | 3 | 3 | 3 | - | 3 |
| 1002 | 20 | 3 | 2 | 3 | 1 | 3 | 2 | 3 | 2 | 3 | 2 | 3 | 1 | 3 | 2 | 3 | - | 2 |
| 1003 | 10 | 2 | 3 | 3 | 2 | 3 | 3 | 3 | 3 | 3 | 3 | 2 | 2 | 2 | 2 | 3 | - | 3 |
| 1501 | 5 | 2 | 2 | 3 | 1 | 3 | 2 | 3 | 2 | 3 | 2 | 3 | 2 | 2 | 2 | 2 | - | 2 |
| 1502 | 50 | 1 | 3 | 2 | 3 | 3 | 3 | 2 | 3 | 2 | 3 | 2 | 2 | 2 | 3 | 2 | - | 3 |
| 2001 | 5 | 1 | 2 | 2 | 1 | 2 | 1 | 2 | 1 | 3 | 1 | 2 | 1 | 1 | 2 | 3 | - | 2 |
| 2002 | 2 | 2 | 2 | 2 | 1 | 3 | 1 | 2 | 1 | 2 | 1 | 2 | 1 | 2 | 2 | 2 | - | 2 |
| 2501 | 10 | 2 | 1 | 2 | 1 | 2 | 1 | 2 | 2 | 2 | 1 | 2 | 2 | 3 | 2 | 2 | - | 2 |
| 3001 | 5 | 3 | 2 | 3 | 2 | 3 | 3 | 3 | 3 | 3 | 2 | 3 | 3 | 3 | 2 | 3 | - | 3 |
| 3501 | 2 | 2 | 2 | 2 | 1 | 3 | 2 | 2 | 3 | 2 | 2 | 1 | 2 | 2 | 3 | 2 | + | 3 |
|  | 5 | 2 | 2 | 2 | 2 | 2 | 1 | 2 | 2 | 1 | 2 | 1 | 2 | 2 | 2 | 2 | - | 2 |
| 3502 | 5 | 3 | 1 | 3 | 1 | 3 | 2 | 3 | 1 | 2 | 1 | 3 | 1 | 3 | 1 | 3 | - | 3 |
| 3503 | 5 | 2 | 2 | 2 | 1 | 2 | 1 | 3 | 2 | 1 | 1 | 2 | 1 | 3 | 2 | 3 | - | 2 |
| 4001 | 5 | 1 | 3 | 1 | 2 | 1 | 3 | 1 | 3 | 2 | 3 | 1 | 3 | 1 | 3 | 2 | - | 3 |
| 4002 | 10 | 2 | 3 | 2 | 3 | 2 | 3 | 3 | 3 | 3 | 3 | 3 | 3 | 3 | 3 | 3 | - | 3 |
| 4501 | 5 | 2 | 2 | 1 | 1 | 2 | 1 | 2 | 1 | 2 | 2 | 1 | 1 | 1 | 2 | 3 | - | 2 |
| 5001 | 10 | 3 | 3 | 1 | 3 | 2 | 3 | 3 | 3 | 2 | 3 | 2 | 2 | 2 | 3 | 3 | + | 3 |
| 5502 | 10 | 1 | 2 | 1 | 2 | 1 | 3 | 2 | 3 | 2 | 2 | 2 | 1 | 1 | 3 | 3 | - | 2 |
| 5503 | 5 | 3 | 3 | 2 | 2 | 1 | 2 | 1 | 2 | 3 | 3 | 2 | 2 | 2 | 3 | 2 | - | 3 |
| 5504 | 5 | 3 | 3 | 3 | 2 | 3 | 2 | 2 | 2 | 3 | 3 | 3 | 3 | 3 | 3 | 2 | - | 3 |
| 5506 | 5 | 2 | 2 | 2 | 2 | 2 | 2 | 3 | 2 | 3 | 3 | 2 | 2 | 2 | 2 | 3 | + | 3 |
| 5507 | 3 | 2 | 2 | 2 | 2 | 3 | 2 | 3 | 2 | 3 | 3 | 3 | 2 | 2 | 3 | 3 | + | 3 |
| 5508 | 8 | 3 | 3 | 3 | 2 | 3 | 2 | 3 | 2 | 3 | 3 | 2 | 2 | 2 | 3 | 2 | + | 3 |
| 6001 | 50 | 1 | 3 | 1 | 2 | 3 | 3 | 2 | 3 | 3 | 3 | 2 | 3 | 1 | 2 | 3 | - | 3 |
| 6002 | 20 | 2 | 3 | 2 | 2 | 2 | 3 | 2 | 3 | 3 | 3 | 2 | 3 | 2 | 2 | 3 | - | 3 |
| 6501 | 5 | 2 | 2 | 2 | 1 | 3 | 1 | 3 | 1 | 3 | 2 | 2 | 1 | 3 | 3 | 1 | - | 2 |
| 6502 | 10 | 1 | 2 | 2 | 1 | 2 | 2 | 2 | 2 | 2 | 1 | 1 | 1 | 2 | 2 | 2 | - | 2 |
| 7001 | 10 | 1 | 2 | 1 | 2 | 1 | 2 | 3 | 3 | 2 | 2 | 2 | 2 | 1 | 2 | 2 | - | 2 |
| 7002 | 10 | 2 | 2 | 1 | 2 | 2 | 2 | 3 | 3 | 2 | 3 | 2 | 2 | 1 | 2 | 2 | - | 2 |
| 7003 | 10 | 1 | 2 | 2 | 1 | 3 | 2 | 2 | 2 | 2 | 1 | 1 | 1 | 2 | 2 | 1 | - | 2 |
| 7004 | 4 | 1 | 3 | 2 | 2 | 2 | 2 | 3 | 3 | 2 | 3 | 2 | 3 | 2 | 2 | 3 | - | 3 |
| 7005 | 10 | 2 | 2 | 2 | 1 | 3 | 2 | 2 | 3 | 2 | 2 | 3 | 3 | 3 | 3 | 3 | - | 3 |
|  | 5 | 3 | 2 | 3 | 1 | 2 | 2 | 3 | 3 | 2 | 2 | 3 | 3 | 3 | 3 | 2 | - | 3 |
| 7006 | 5 | 3 | 1 | 3 | 1 | 3 | 1 | 3 | 1 | 3 | 1 | 3 | 1 | 1 | 2 | 3 | - | 2 |
| 7501 | 5 | 1 | 2 | 2 | 1 | 2 | 2 | 2 | 1 | 2 | 2 | 1 | 1 | 1 | 2 | 1 | - | 1 |
| 7502 | 4 | 1 | 2 | 2 | 1 | 2 | 1 | 2 | 1 | 2 | 1 | 1 | 1 | 1 | 1 | 1 | - | 1 |
| 7502 | 10 | 1 | 1 | 1 | 1 | 1 | 1 | 1 | 1 | 1 | 1 | 1 | 1 | 1 | 1 | 1 | - | 1 |

EXAMPLE 2 -Immersion of I5 Infant Rats

I5 infant rats, 6 weeks old, were killed by an overdose of narcotics and the skin was stripped off. The prepared rats were immersed into the embalming solution which was used in an amount such that a ratio of I0 : I or more, compared to the weight of the rats, was obtained.

The following embalming solutions were used for immersing the infant rats: 50% diethylene glycol, 40% isopropanol, I0% of the substance tested.

After a period of three months, the results were judged by using the following criteria and are set forth in Table 2.

Suspended matter in solution:

I none
2 noticeable but no settling
3 cloudy with settling.

Shrinkage

I none
2 noticeable
3 severe

Expansion (increase in volume)

I none
2 noticeable
3 severe

Depth of Penetration

I fully
2 half
3 minimal

The criteria for odor, color and consistency were the same as outlined in the infusion experiments with rats (Table I).

TABLE NO. 2

Results of embalming by immersion of 15 infant rats

| Subst. tested | Susp. matter | Shrinkage | Expansion | Odor | Color | Consistency | Penetration | Overall quality |
|---|---|---|---|---|---|---|---|---|
| 2001 | 2 | 1 | 1 | 3 | 3 | 1 | 1 | 2 |
| 2002 | 1 | 1 | 1 | 3 | 2 | 2 | 2 | 2 |
| 3501 | 2 | 1 | 1 | 2 | 2 | 2 | 1 | 2 |
| 4001 | 1 | 1 | 1 | 3 | 3 | 3 | 1 | 3 |
| 4501 | 3 | 1 | 1 | 3 | 2 | 2 | 1 | 2 |
| 5503 | 3 | 1 | 2 | 3 | 3 | 3 | 1 | 3 |
| 5505 | 3 | 3 | 1 | 1 | 2 | 3 | 2 | 3 |
| 5508 | 3 | 1 | 3 | 2 | 2 | 3 | 1 | 3 |
| 6001 | 1 | 1 | 1 | 2 | 2 | 3 | 1 | 3 |
| 6501 | 1 | 1 | 2 | 2 | 3 | 3 | 3 | 3 |
| 7004 | 2 | 1 | 2 | 3 | 3 | 2 | 2 | 3 |
| 7005 | 3 | 1 | 2 | 3 | 3 | 3 | 2 | 3 |
| 7006 | 3 | 1 | 1 | 3 | 3 | 2 | 1 | 3 |
| 7501 | 2 | 1 | 1 | 1 | 2 | 1 | 1 | 1 |
| 7502 | 2 | 2 | 1 | 2 | 1 | 1 | 1 | 1 |

EXAMPLE 3 -Infusion of 5 human cadavers

Five human cadavers with a weight between 65 kg and 75 kg were infused through the femoral artery with l5-20 kg of embalming solution. Infusion was effected by gravity. The infusion bottle was placed 2 m above the cadavers.

For cadaver l, 2, and 3, the following embalming solution was used: isopropanol 40%, diethylene glycol 47.5 %, Triton 0.5 %, pine oil 2%, l0% of the substance tested of the kind shown in Table 3. Compared to the rat infusion experiments, diethylene glycol was partly replaced by isopropanol. Preliminary tests had shown that the exclusive use of diethylene glycol in human cadavers resulted in insufficient infusion of the human cadavers.

After the embalming procedure, the cadavers were sealed airtight into plastic bags and stored at room temperature for a period of three months. Thereafter, the three cadavers were dissected and muscle and internal organs judged. The results of the embalming are listed in Table 3.

## TABLE NO. 3

Results of embalming by infusion of 5 human cadavers

| Substance tested | Subst. 2001 | Subst. 4501 | Subst. 7502 |
|---|---|---|---|
| Muscle | | | |
| color | 2 | 1 | 1 |
| consistency | 2 | 2 | 1 |
| Connective tissue | | | |
| color | 2 | 1 | 1 |
| consistency | 2 | 2 | 1 |
| Fat tissue | | | |
| color | 3 | 1 | 1 |
| consistency | 3 | 3 | 2 |
| Peripheral nerves | | | |
| color | 1 | 1 | 1 |
| consistency | 1 | 1 | 1 |
| Blood vessels | | | |
| color | 2 | 1 | 1 |
| consistency | 2 | 2 | 1 |
| Heart | | | |
| color | 3 | 2 | 1 |
| consistency | 2 | 2 | 1 |
| Lung | | | |
| color | 2 | 2 | 1 |
| consistency | 2 | 2 | 2 |
| Liver | | | |
| color | 2 | 2 | 1 |
| consistency | 1 | 1 | 1 |
| Kidney | | | |
| color | 3 | 3 | 1 |
| consistency | 2 | 2 | 2 |
| Gastro-intestinal tract | | | |
| color | 3 | 1 | 1 |
| consistency | 3 | 2 | 1 |
| Overall odor | 2 | 3 | 1 |
| Differentiability between different kinds of tissue | 3 | 1 | 1 |
| Overall quality | 2 | 2 | 1 |

Two additional cadavers, cadavers No. 4 and 5, were infused with the condensation product (testing substance 7502). In one cadaver (No. 4), the diethylene glycol and isopropanol as used in cadavers I - 3, was replaced by water, cadaver No. 5, 20% glycerin and water was used instead.

The only differences in the results as compared to cadavers l, 2, and 3, were that cadavers No. 4 and 5 dried out faster during dissection, were less lubricant, the tissue was a little more pliable and the cadavers did not exhibit the odor of isopropanol. All cadavers infused with the condensation product showed the highest flexibility, best consistency and best color.

The intestinal tract of the human cadavers was exceptionally pliable and flexible, resembling more fresh tissue than that of a cadaver embalmed with conventional solutions. The muscles were easy to dissect, pliable but resistant to mechanical stress.

EXAMPLE 4

Immersion of different kinds of specimens

The following specimens have been immersed in the five different solutions which were used for the five human cadavers for a period of 6 months: grasshoppers, human tongue with thyroid and trachea, human aorta cut open, with a diameter of up to 5 cm, different ferns with a total length of up to 30 cm.

A number of specimens, namely, a human knee joint with dissected ligaments, human stomach, human aorta, dissected bull frog, internal organs of a cat and dog, were treated with plain water and the condensation product (95% water, 5% compound 7502) for a period of four months.

All specimens remained flexible with very good color. The embalming solutions with the condensation product, except those containing isopropanol, had no odor. The human tongue specimen was fully preserved. In summary, parallel specimens treated with formaldehyde showed inferior quality with respect to color, flexibility, clarity of the solution and odor.

In the experiments described, a number of additives were used which are recommended in the literature and known in the art of embalming. Thus, diethylene glycol was used as lubricant and for keeping the specimens wet at normal atmospheric conditions due to its high hygroscopic effect. Triton was used as a wetting agent. Isopropanol was used because of its known color preserving effect and to keep the water content of the specimens as low as possible, since bacterial growth depends largely on the presence of water.

For economical reasons, it is preferred to use embalming solutions wherein the concentration of the condensation product is no more than 20% and, preferably, from about 5 to l0%. The same concentrations may be used when infiltration or infusion is used to imbue the specimens.

In general, a concentration of the condensation product in an amount of l to 5% by weight of the average treated specimen is sufficient to give a storage life of the treated specimen from one month to an indefinite period of time. The amount of embalming solution to be deposited in the specimen may be varied to suit the purpose for which the specimen is to be used.

In summary, the embalming process of the present invention exhibited the following unexpected advantages over known embalming processes.

l. The condensation product has excellent penetration capabilities into specimens as it is known from formaldehyde. The good penetration capability could not be expected from the large size of the molecule of the active compound. Glutaraldehyde, for instance, with its much smaller molecule has a much inferior penetration ability which makes unsuitable for embalming by immersion.

2. High flexibility of the processed specimens. This is especially useful in joint specimens and in small, fragile specimens, such as, insects with fragile limbs.

3. Lifelike color preservation. The color was better preserved than with any other embalming process used and known. The human brain was exceptionally well preserved with sharp differentiation of the white and gray matter.

4. The embalming process is not toxic because of the very low toxicity profile of the condensation product. Moreover, the condensation product is virtually odorless in solution because of its negligible vapor pressure.

## Claims

l. In a method for embalming macroscopic specimens of the animal kingdom and humans wherein the specimen is treated with an embalming composition composed of an effective amount of an embalming agent and commercial additives, the improvement which comprises the embalming agent being

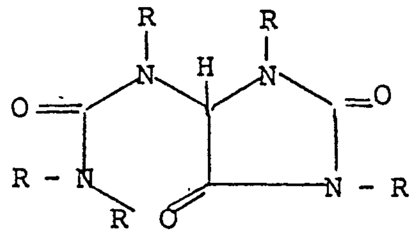

( I )

wherein R may be the same or different and is selected from the group consisting of H, $CH_2OH$, and $-CH_2-$, with the proviso that all of the R groups may not simultaneously be hydrogen and that when R is $-CH_2-$, both bonds may be attached to the same nitrogen atom or to two different nitrogen atoms, or may serve as a bridge to connect one additional unit having structure I.

2. The method of claim I wherein the embalming composition is infused into the specimen.

3. The method of claim I wherein the embalming composition is infiltrated into the specimen.

4. The method of claim I whrein the specimen is immersed in the embalming composition.

5. The method of claim I, 2, 3, or 4 wherein the embalming agent is

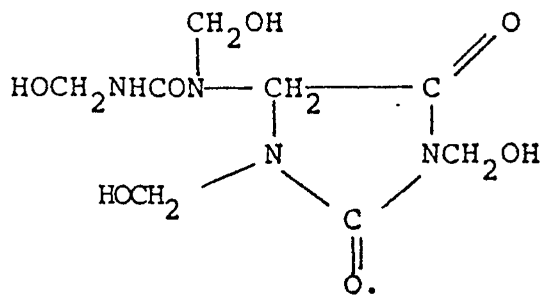

6. The method of claim I, 2, 3 or 4 wherein the embalming agent is

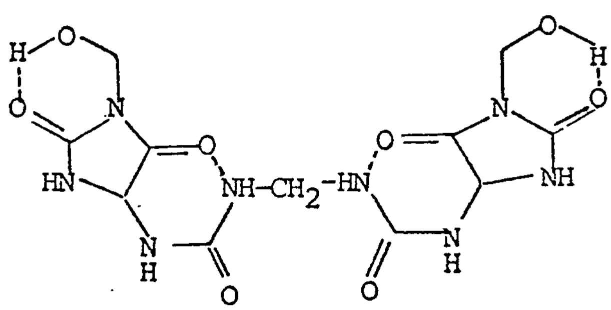

7. In an embalming composition composed of an effective amount of an embalming agent and conventional additives, the improvement which comprises the embalming agent being

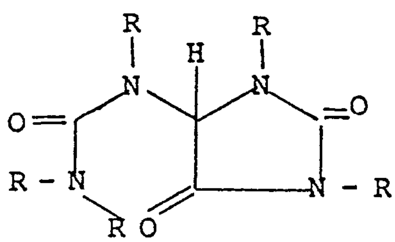

(I)

wherein R may be the same or different and is selected from the group consisting of H. $CH_2OH$. and $-CH_2-$, with the proviso that all of the R groups may not simultaneously be hydrogen and that when R is $-CH_2-$,

both bonds may be attached to the same nitrogen atom or to two different nitrogen atoms, or may serve as a bridge to connect one additional unit having structure I.

8. The composition of claim 7 wherein the embalming agent is

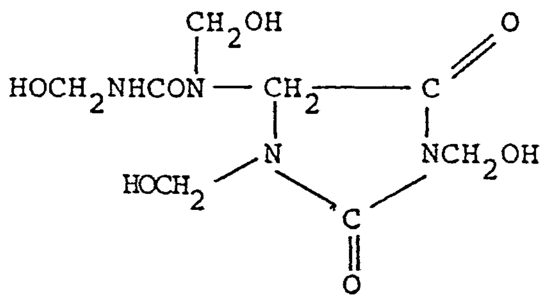

9. The composition of claim 7 wherein the embalming agent is

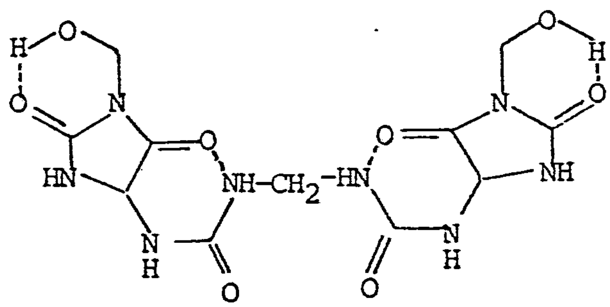

10. A composition comprising a surface active agent and more than 50 percent by weight of a compound having the formula

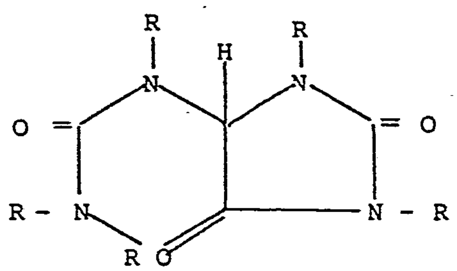

(I)

wherein R may be the same or different and is selected from the group consisting of H, $CH_2OH$, and $-CH_2-$, with the proviso that all of the R groups may not simultaneously be hydrogen and that when R is $-CH_2-$, both bonds may be attached to the same nitrogen atom or to two different nitrogen atoms, or may serve as a bridge to connect one additional unit having structure I.

11. The composition of claim 10 wherein the compound is

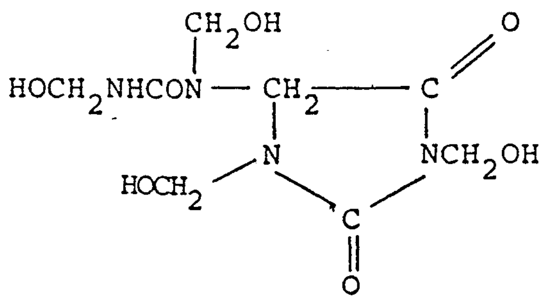

12. The composition of claim 10 wherein the compound is

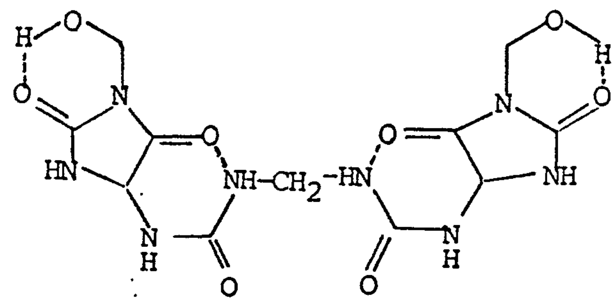

European Patent Office

# EUROPEAN SEARCH REPORT

Application number

EP 87 10 5664

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 080 281 (WIGGLESWORTH LTD)<br>* Page 4, line 19 - page 6, line 12; page 7, line 17 - page 8, line 20; page 10, line 16 - page 14, line 5; claims * | 1-12 | A 01 N 1/00 |
| Y | EP-A-0 046 361 (SUTTON LABORATORIES)<br>* Page 1, lines 14-24; page 6, line 30 - page 7, line 27; example XII; claims * | 1-12 | |
| Y | WO-A-8 100 566 (SUTTON LABORATORIES)<br>* Page 3, line 1 - page 4, line 18; claims * | 1-12 | |
| Y | US-A-3 248 285 (P.A. BERKE)<br>* Column 2, line 69 - column 3, line 30; claims * | 1-12 | TECHNICAL FIELDS SEARCHED (Int. Cl.4)<br>A 01 N<br>C 07 D |
| D,Y | US-A-2 786 081 (B.H. KRESS)<br>* Whole document * | 1-12 | |

The present search report has been drawn up for all claims

| Place of search | Date of completion of the search | Examiner |
|---|---|---|
| THE HAGUE | 19-08-1987 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82